Europäisches Patentamt

European Patent Office

Office européen des brevets

(19)

(11) Veröffentlichungsnummer : **0 064 583**
**B1**

(12) **EUROPÄISCHE PATENTSCHRIFT**

(45) Veröffentlichungstag der Patentschrift :
18.09.85

(21) Anmeldenummer : 82101981.7

(22) Anmeldetag : 12.03.82

(51) Int. Cl.⁴ : **B 61 D 25/00**, B 60 J 1/10,
B 64 C 1/14

(54) **Ausbildung von Fahrzeug-Fenstereinfassungen.**

(30) Priorität : 30.04.81 DE 3117103

(43) Veröffentlichungstag der Anmeldung :
17.11.82 Patentblatt 82/46

(45) Bekanntmachung des Hinweises auf die Patenterteilung : 18.09.85 Patentblatt 85/38

(84) Benannte Vertragsstaaten :
AT CH FR GB IT LI

(56) Entgegenhaltungen :
DD-C-    66 641
DE-A- 2 847 404
DE-C-    673 951
FR-A- 2 373 432
FR-A- 2 453 743
"Grundlagen der Luftfahrzeugtechnik in Theorie und
Praxis" Band II: Flugwerk - 1980 - TÜV Rheinland-Köln
Seiten 129-135

(73) Patentinhaber : **Messerschmitt-Bölkow-Blohm Gesellschaft mit beschränkter Haftung
Robert-Koch-Strasse
D-8012 Ottobrunn (DE)**

(72) Erfinder : **Hassel, Helmut, Dr.
Bodenehrstrasse 20
D-8850 Donauwörth (DE)**
Erfinder : **Klapper, Helmut
Heckenrosenstrasse 7
D-8850 Donauwörth (DE)**

Jouve, 18, rue St-Denis, 75001 Paris, France

## Beschreibung

Die Erfindung bezieht sich auf eine nach dem Oberbegriff des Anspruchs 1 ausgebildete Fenstereinfassung.

Bei Reisezugwagen ist es bekannt, die Befestigung eines Fensters in der Fensteröffnung eines Fahrzeugkörpers über einen Fensterrahmen so durchzuführen, daß sie an dem längs des Fensterausschnittes verlaufenden Flansch oder Rand der äußeren aus Blech oder anderem Material bestehenden Bekleidung (Außenhaut) des Fahrzeugkörpers erfolgt (DD-A-66 641). Dabei können auch die Halterungen der Fenster über Abedeckleisten erfolgen, wobei in der Regel zwischen den Abdeckleisten und der Außenhaut Gummidichtprofile angeordnet sind.

Diese bekannten Einfassungen ragen aus der Außenhaut des Fahrzeuges hervor mit der Folge, daß diese vorspringenden Teile nicht nur den aerodynamischen Widerstand an der Wagenaußenseite insb. bei großen Geschwindigkeiten erhöhen, sondern auch den Waschvorgang in der Waschanlage behindern. Bei schneller Fahrt entstehen zudem zusätzliche Geräusche durch die vorspringenden Teile.

Aufgabe der vorliegenden Erfindung ist es, diese Nachteile zu vermeiden.

Diese Aufgabe wird durch die Ausbildung nach dem Anspruch 1 gelöst ; weitere Ausbildungen nach der Erfindung ergeben sich aus den abhängigen Ansprüchen bzw. der weiteren Beschreibung und der Zeichnung.

Durch eine nach der Erfindung ausgebildete Einfassung wird nicht nur der aerodynamische Widerstand an der Fahrzeugaußenhaut vermindert und der Waschvorgang erleichtert, es wird auch die Fahrzeugaußenhaut zusätzlich von vornherein geringer verschmutzt, da sie wegen des Fortfalls von vorspringenden Teilen keine Auffänger für Schmutzpartikel besitzt. Die Bildung von Geräuschen durch vorspringende Fenstereinfassungen entfällt.

Unter Fenster werden hier einzelne Scheiben, mehrere Scheiben bzw. Scheibenkombinationen, möglicherweise auch mit deren Rahmen, soweit sie nicht zu den Einfassungen zu rechnen sind, aber auch Scheiben etc. mit Dichtungen, Abstandsstücken o. ä. verstanden.

Anhand von Beispielen wird nun die Erfindung in Zusammenhang mit der Zeichnung beschrieben. Diese zeigt in

Figur 1 eine Möglichkeit der Ausbildung eines Fensters,

Figur 2 dasselbe in Abwandlung,

Figur 3 die Ausbildung des Rahmens,

Figur 4 ein montiertes Fenster,

Figur 5 dasselbe in Abwandlung,

Figur 6 eine weitere Abwandlung,

Figur 7 ebenfalls eine Abwandlung,

Figur 8 Prinzipdarstellungen für Rahmenausführungen, alles in Teilschnitten, mit Ausnahme der Prinzipdarstellungen.

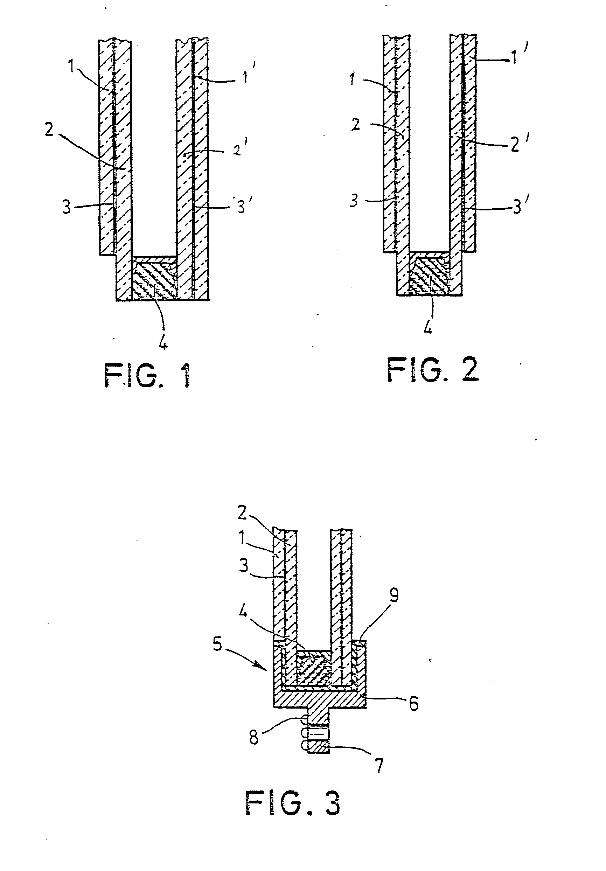

Die in Figur 1 dargestellte Zusammensetzung eines Fensters besteht aus zwei aus Glas ausgebildeten äußeren Scheiben 1, 1', die über Verbundschichten 3, 3', an den inneren Scheiben 2, 2' anliegen, wobei diese entweder ebenfalls aus Glas oder auch aus Polycarbonat bestehen können, letzteres vor allem dann, wenn man eine Gewichtserleichtung erreichen will, während die äußeren Scheiben 1 durch das Glas verschleißfester bleiben. Durch das Abstandsstück 4 wird bewirkt, daß zwischen den Scheiben die Luft steht. der Wärmeübergang also vermindert und ein Beschlagen der zum Innenraum des Fahrzeuges gerichteten Scheiben (in der Figur rechts) verhindert wird.

Die Figur 2 unterscheidet sich gegenüber der Figur 1 lediglich darin, daß die Scheiben 1, 1' auf keiner der beiden Seiten nicht bis zum unteren Rand gezogen sind und so eine Variation beim Einbau ermöglichen, wie aus den weiteren Figuren noch ersichtlich wird.

Die in Figur 3 dargestellte Einfassung 5 des Fensters besteht aus einem Einfaßrahmen 6 mit Befestigungsflansch 7, der auf seiner der Außenseite zugekehrten Fläche 8 mit einem Dichtungs- und Arretierungsprofil oder einer aufgeklebten Dichtung versehen ist. Auf der den Scheiben 1, 2 bzw. 1', 2' zugekehrten Flächen des Einfaßrahmens 6 sind elastische Zwischenlagen 9 angeordnet, die auf der der Außenseite zugekehrten Fläche auch an der gekürzten Schmalseite der Scheibe 1 anliegen und bündig sowohl mit dem Einfaßrahmen 6 als auch der Scheibe 1 sind.

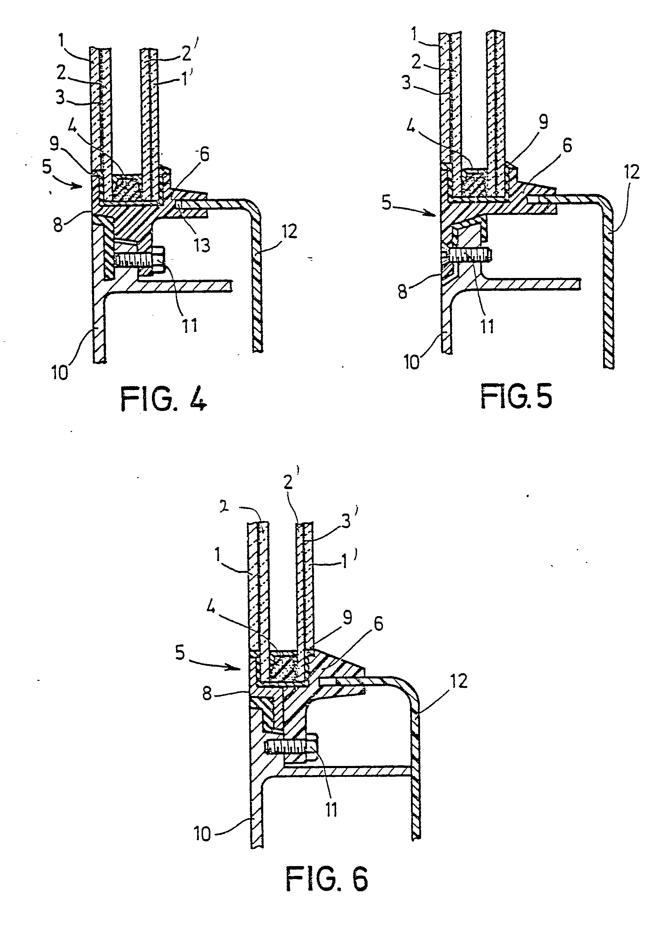

Ein entsprechend der Figur 3 ausgebildetes Fenster im eingebauten Zustand wird in Figur 4 dargestellt, wobei die Einfassung 5 leicht variiert ist. Man erkennt, daß sowohl die Scheibe 1 als auch die Zwischenlage 9 zusammen mit dem Einfaßrahmen 6, der Verlängerung der Fläche 8 und dem Außenwandprofil 10 der Außenhaut des Fahrzeuges bündig sind. Dabei ist es gleichgültig, ob die Einfassung 5 mit einem Einfaßrahmen 6 aus Kunststoff oder einem anderen Material beispielsweise Aluminium ausgebildet ist. In allen Fällen wird dieser über Schrauben 11 mit dem Außenwandprofil 10 verbunden. Die Innenwand 12 ist in eine Nut 13 des Einfaßrahmens 6 eingeschoben und dient der Abdeckung und Isolierung gegenüber dem Außenwandprofil 10.

Statt der Befestigung des Einfaßrahmens 6 über eine nur von innen zugängliche Schraube 11 kann es zweckmäßig sein, eine von außen zugängliche Schraube 11 entsprechend der Figur 5 vorzusehen, unter geringfügiger Änderung der Geometrie der Einfassung 5. Bildet man entsprechend der Figur 6 sowohl die nach außen als auch die nach innen liegenden Scheiben 1 in ihrem der Einfassung 5 zukehrten Bereich kürzer als die innenliegenden Scheiben 2 aus, so erhält man einen eleganteren Übergang von den Scheiben 1 zum Einfaßrahmen 6. Es ist dabei gleichgültig, ob die Montage analog zu Figur 4 von innen, also wie dargestellt, oder von außen analog zu Figur 5 erfolgt. Auch kann der Einfaßrahmen 6 aus zwei Materialien nämlich innen aus Kunststoff und außen aus Aluminium, wie dargestellt, bestehen.

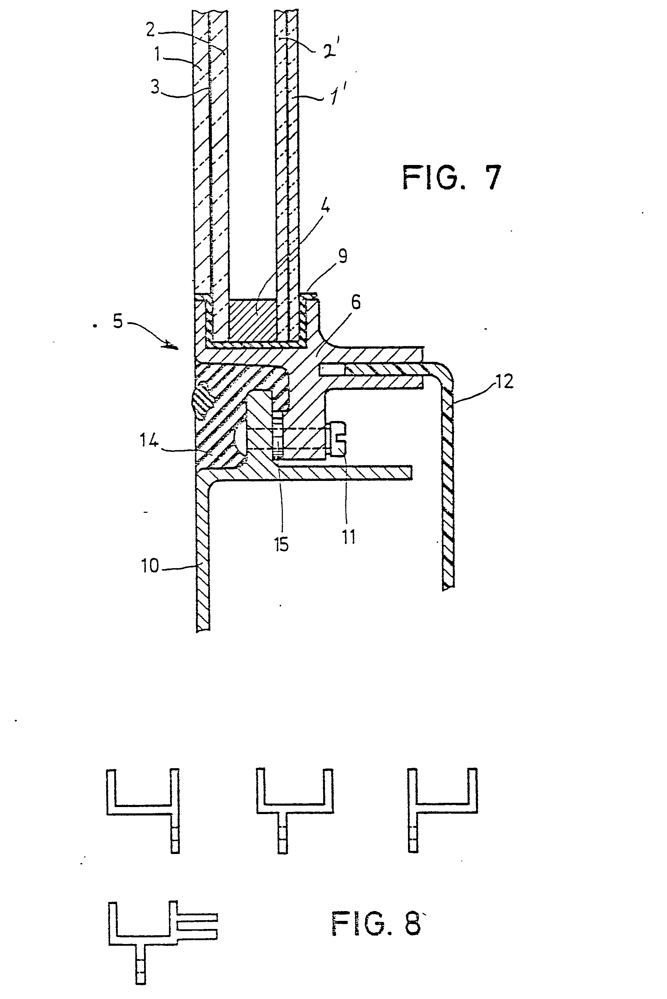

Die weitere Variation gemäß Figur 7 zeigt die Verwendung eines Einreißfüllers 14 als außenseitige Abdichtung zwischen dem Einfaßrahmen 6, hier aus Aluminium ausgebildet, und dem Außenwandprofil 10. Hierdurch wird, sofern man eine Kunststoffscheibe 15 zwischen dem Einfaßrahmen 6 und dem Außenwandprofil 10 im Bereich der Schraube 11 verwendet, die Körperschallübertragung aus dem Fensterbereich auf die Außenhaut und umgekehrt vermieden.

Die in Figur 8 dargestellten Einfaßrahmen zeigen nur einige wenige ihrer möglichen Ausbildungen so, wie sie bei den Anordnungen nach den weiter oben beschriebenen Figuren verwendbar sein könnten.

## Patentansprüche

1. Ausbildung der Einfassung eines zumindest auf der Außenseite mit einer Verbundverglasung (1, 2, 3 ; 1', 2', 3') versehenen Fahrzeugfensters, insbesondere eines solchen für den schienengebundenen Verkehr, mit einem mit der Fahrzeug-Außenhaut bündigen Einfaßrahmen (6), dadurch gekennzeichnet, daß der Einfaßrahmen (6) die fahrzeuginnere Scheibe (2) der außenseitigen Verbundverglasung (1, 2, 3) übergreifend und bündig mit der entsprechend kleiner als die innere Scheibe (2) bemessenen, fahrzeugäußeren Scheibe (1) der Verbundverglasung ausgebildet ist.

2. Ausbildung nach Anspruch 1, dadurch gekennzeichnet, daß die fahrzeugäußere Scheibe (1) der außenseitigen Verbundverglasung (1, 2, 3) kleiner als der Fensterausschnitt in der Außenhaut (10) ist.

3. Ausbildung nach Anspruch 1 oder 2, dadurch gekennzeichnet, daß die zwischen der außenseitigen Verbundverglasung (1, 2, 3) und dem Einfaßrahmen (6) bzw. zwischen diesem und der Außenhaut (10) angeordnete Dichtung (9) ebenfalls mit der fahrzeugäußeren Scheibe (1) und der Außenhaut bündig ist.

## Claims

1. Construction for the edging of a vehicle window which is provided at least at the outside with a laminated glazing, (1, 2, 3 ; 1', 2', 3') more especially for rail-tied traffic, having an edging frame (6) which isflush with the outer skin of the vehicle, characterised in that the edging frame (6) is designed so as to engage over the pane (2), on the inside of the vehicle, of the external laminated glazing (1, 2, 3) and so as to be flush with the pane (1) on the outside of the vehicle and dimensioned correspondingly smaller than the inner pane (2), of the laminated glazing.

2. Construction according to claim 1, characterised in that the pane (1), at the outside of the vehicle, of the external laminated glazing (1, 2, 3) is smaller than the window opening in the outer skin (10).

3. Construction according to claim 1 or 2, characterised in that the seal (9) which is arranged between the external laminated glazing (1, 2, 3) and the edging frame (6) or respectively between this and the outer skin (10) is likewise flush with the pane (1) at the outside of the vehicle and the outer skin.

## Revendications

1. Agencement de l'encadrement d'une fenêtre de véhicule, notamment pour le trafic ferroviaire, munie, au moins sur sa face extérieure, d'un vitrage composite (1, 2, 3 ; 1', 2', 3'), avec un châssis d'encadrement (6) aligné avec l'enveloppe extérieure du véhicule, agencement caractérisé par le fait que le châssis d'encadrement (6) est établi en chevauchement de la vitre intérieure (2) du vitrage composite côté extérieur (1, 2, 3) et en alignement avec la vitre extérieure (1) de ce même vitrage côté extérieur, rendue, dans une mesure correspondante, plus petite que la vitre intérieure (2).

2. Agencement selon la revendication 1, caractérisé par le fait que la vitre extérieure (1) du vitrage composite côté extérieur (1, 2, 3) est plus petite que l'échancrure de la fenêtre dans l'enveloppe extérieure (10).

3. Agencement selon la revendication 1 ou 2, caractérisé par le fait que le joint (9) placé entre le vitrage composite côté extérieur (1, 2, 3) et le châssis d'encadrement (6), ou entre ce dernier et l'enveloppe extérieure (10), est également aligné avec la vitre extérieure (1) et ladite enveloppe extérieure (10).

FIG. 1

FIG. 2

FIG. 3

FIG. 4

FIG. 5

FIG. 6

FIG. 7

FIG. 8